(19) Europäisches Patentamt
European Patent Office
Office européen des brevets

(11) EP 0 637 788 B1

## (12) EUROPEAN PATENT SPECIFICATION

(45) Date of publication and mention
of the grant of the patent:
**12.03.1997   Bulletin 1997/11**

(51) Int Cl.⁶: **G05D 16/20**

(21) Application number: **94110279.0**

(22) Date of filing: **01.07.1994**

(54) **Control apparatus for hydraulic actuator**

Steuereinheit für hydraulischen Stellantrieb

Appareil de commande pour un organe correcteur hydraulique

(84) Designated Contracting States:
**DE FR GB IT**

(30) Priority: **05.07.1993   KR 9312561**

(43) Date of publication of application:
**08.02.1995   Bulletin 1995/06**

(73) Proprietor: **SAMSUNG HEAVY INDUSTRY CO., LTD
Seoul (KR)**

(72) Inventors:
• **Bong-Dong, Whang
  Changwon-Shi, Kyung Nam (KR)**

• **Kyung-Kwan, Ahn
  Changwon-Shi, Kyung-Nam (KR)**

(74) Representative:
**Herrmann-Trentepohl, Werner, Dipl.-Ing.
Patentanwälte
Herrmann-Trentepohl
Grosse - Bockhorni & Partner
Forstenrieder Allee 59
81476 München (DE)**

(56) References cited:
**EP-A- 0 275 968          EP-A- 0 381 328
DE-A- 3 044 515**

## Description

## Background of The Invention

This invention is concerned about an apparatus for controlling direction and velocity of a hydraulic actuator using a micro-computer, more particularly, an apparatus for controlling precisely the moving direction and velocity of a hydraulic actuator in a hydraulic system consisting of a hydraulic pump, a hydraulic valve, and a hydraulic actuator.

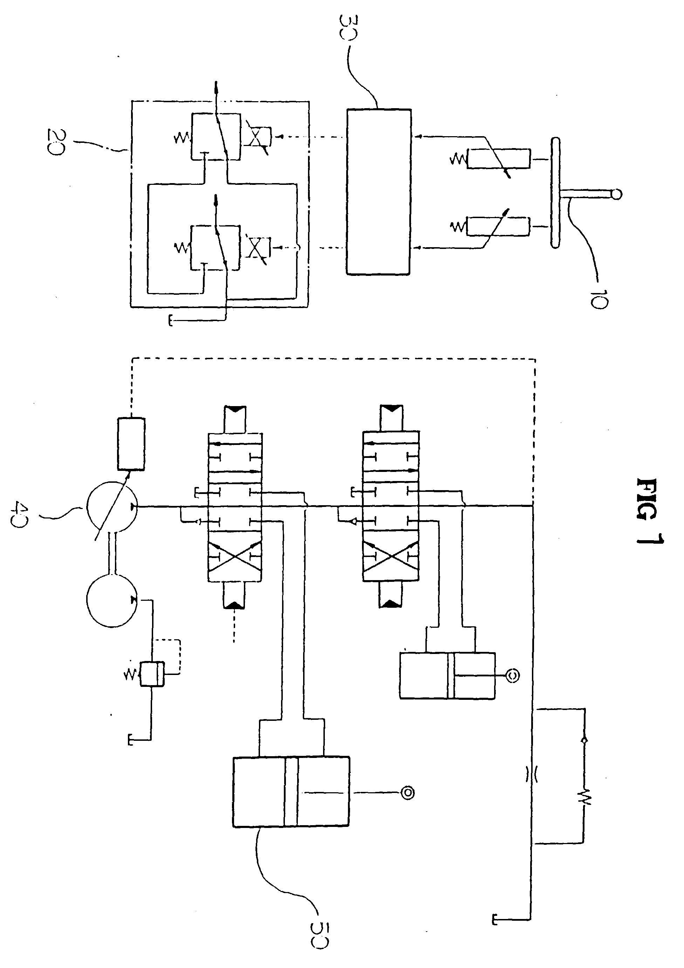

Generally, in a hydraulic system with electronic control means such as micro-computer as shown in figure 1, the oil amount required for actuating a hydraulic actuator 50 is supplied from a hydraulic pump 40 by applying an operating command signal from a manipulation device 10 such as joystick to a controller 30 which applies an electric signal proportional to the operating command signal to a solenoid controlled proportional valve 20.

However, in the conventional hydraulic system as described in the above, there has been problem that the moving velocity of the hydraulic actuator 50 is not equal to the velocity required from a controller 30 which is given by an operating command signal from a manipulation device 10, since the velocity varies with the load of the hydraulic actuator 50. This problem makes it difficult to control precisely the direction and velocity of the hydraulic actuator 50.

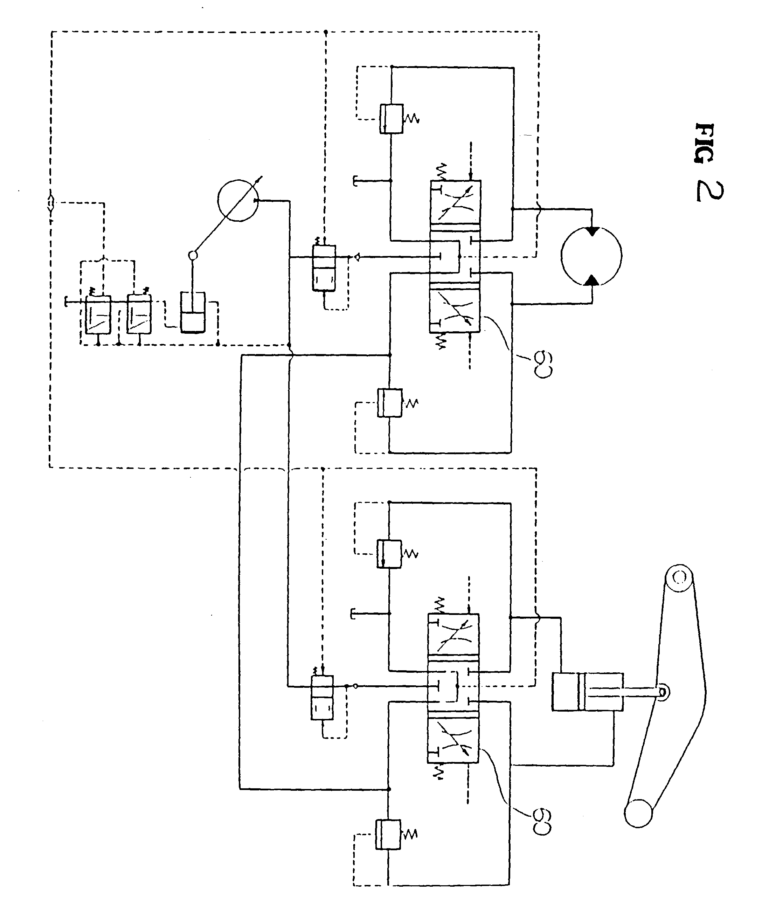

Accordingly, in order to prevent the velocity variance with the load of the hydraulic actuator 50, the hydraulic system incorporating a regulating valve 60 in a hydraulic circuit as shown in figure 2 has been used. However, in this system, there have been problems of the increased manufacture cost due to the complex hydraulic circuit, the energy waste due to the pressure decrease in the regulating valve 60 and the unpreventable free falling due to the self-weight of actuator, particularly in a heavy hydraulic actuator.

## Summary of The Invention

It is an object of the present invention to provide an apparatus for controlling the moving direction and velocity of a hydraulic actuator in which the velocity change of a hydraulic actuator due to the load change can be prevented, and the precise control by an operating command signal can be achieved.

It is another object of the present invention to provide an apparatus for controlling the moving direction and velocity of a hydraulic actuator which can be manufactured with a relatively low cost due to the structure characteristics such as simple design, modular type, and small size, and which can be applied in the various hydraulic actuator systems.

It is also another object of the present invention to provide an apparatus for controlling the moving direction and velocity of a hydraulic actuator in which the free falling due to the self-weight of a hydraulic actuator can be effectively prevented.

In accordance with one aspect of the present invention, there is provided an apparatus for controlling the moving direction and velocity of a hydraulic actuator comprising a variable displacement pump driven by an engine, at least one hydraulic actuator operated by the oil discharged from said pump, operating command means commanding the moving direction and velocity of said actuator, a controller controlling said actuator according to the operating command signal from said operating command means, means for switching the moving direction and selecting said actuator by the control signal from said controller, said means being electrically connected to said controller; and means for controlling the actuation speed of said actuator by regulating the oil amount supplied to said actuator by the control signal from said controller, said means being electrically connected to said controller; wherein the moving direction and the actuating speed are controlled by said switching means and said control means, respectively.

## Detailed Description of The Invention

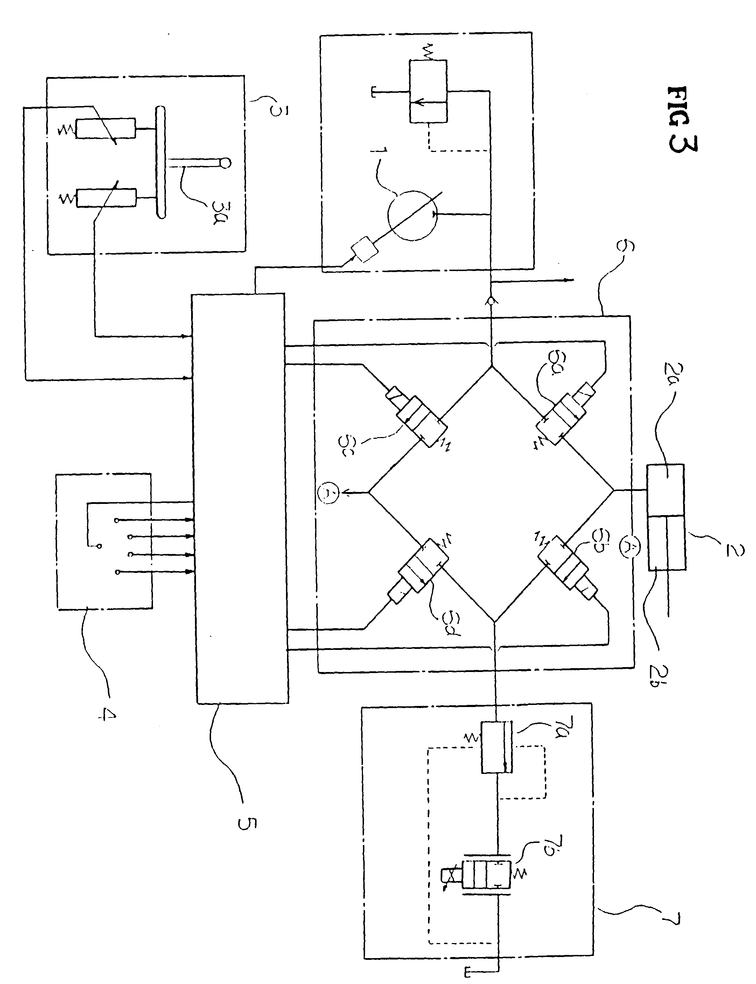

The present invention will be described more in detail with reference to the accompanying drawings wherein figure 1 is a hydraulic circuit showing schematically the conventional control apparatus of a hydraulic actuator, figure 2 is a hydraulic circuit showing schematically another control apparatus of a hydraulic actuator, and figure 3 is a hydraulic circuit showing schematically a control apparatus of hydraulic actuator according to one embodiment of the present invention. The control apparatus according to this embodiment comprises a variable displacement pump 1 which is operated by an engine (not shown) and regulates variably a discharge oil amount by controlling the tilt angle of a swash plate by a regulator (not shown), an operation indicator 3 having a joystick lever 3a in order for an operator to select a corresponding hydraulic actuator 2 and the moving direction, an operation mode selector 4 for selecting the required operation mode (manual or automatic), and a controller 5 for generating a control signal in order to supply the required oil amount to the corresponding actuator 2 from said pump 1 according to the operation command signals from said operation indicator 3 and said operation mode selector 4.

In said engine, there are installed means for detecting the number of rotation of engine and a pulse generator for generating the pulse signal proportional to the number of rotation of engine, and in the pump 1, a detector for detecting the tilt angle of a swash plate is installed. In the oil path said pump 1 to the actuator 2, a direction switch 6 for sending the discharge oil amount of the pump 1 to the selected actuator 2 by the control signal of the controller 5 is installed.

The direction switch 6 forms the loop combining a plurality of the direction control valves connected in series to each other. That is, the 1st direction control valve 6a, the 2nd direction control valve 6b, the 3rd direction control valve 6c and the 4th direction control valve 6d are connected in series to form the loop, and all the direction control valves 6a, 6b, 6c, and 6d are connected electrically to said controller 5.

On the other hand, the oil paths between the direction control valves 6a, 6b, 6c, and 6d in the loop of said direction switch 6 are connected to the pump 1, a large chamber 2a of the actuator 2, a small chamber 2b of the actuator and an oil amount regulator 7, respectively. That is, the oil path between the 1st direction control valve 6a and the 3rd direction control valve 6c is connected to the pump 1, the oil path between the 1st direction control valve 6a and the 2nd direction control valve 6b connected to the large chamber 2a of the actuator 2, the oil path between the 3rd direction control valve 6c and the 4th direction control valve 6d connected to the small chamber 2b of the actuator 2, and the 2nd direction control valve 6b and the 4th direction control valve 6d connected to the oil amount regulator 7.

The oil amount regulator 7 consists of an unload valve 7a and a proportional control valve 7b, wherein the unload valve 7a keeps constant the pressure difference of an oil between before and after passing the proportional control valve 7b, allowing the only oil amount proportional to the input to pass through the proportional control valve 7b and return to a tank.

The controller 5 receives the pulse signal from said pulse generator, the signal from the detector of the tilt angle of swash plate, and the operation command signals from the operation indicator 3 and the operation mode selector 4, and sends the control signals through a predetermined calculation to said direction switch 6, the oil amount regulator 7 and the tilt angle regulator to control the outputs of them.

In the following, the operation of control apparatus of the present embodiment will be described.

The moving direction and speed of each actuator 2 are determined by the operation indicator 3 and the operation mode selector 4. The controller 5 calculates the total required oil amount of pump (Qth) and compares this amount with the real discharge oil amount of pump (Qreal). If Qth>Qreal, the oil amount is increased by increasing the tilt angle of swash plate using a regulator. If Qth<Qreal, the tilt angle of swash plate is controlled to decrease so that the Qth equals to Qreal.

On the other hand, the controller 5 applies the control signal to the direction switch 6 to operate the corresponding actuator 2. For example, on the extension of actuator 2, the 1st and the 4th direction control valves 6a, 6d are ON (supply oil to large chamber 2a) while the 2nd and the 3rd direction control valves 6b, 6c are OFF, and on the compression of actuator 2, the 2nd and the 3rd direction control valves (6b, 6c) are ON while the 1st and 4th direction control valves(6a, 6d) are OFF (supply oil to small chamber 2b).

In the following, the control of oil amount by the oil amount regulator 7 will be described.

The relation between pressure and oil amount given by $Q=CA\sqrt{(dP)}$ (Q;oil amount, C;surface elastic constant, A;opening area. dP;pressure incremental) indicates that the oil amount is proportional to the opening area A. Since the pressure difference of an oil between before and after passing the proportional control valve 7b can be kept constant by the unload valve 7a, the oil amount is proportional to only the opening area A, resulting in the oil amount control.

As described in the above, the present invention not only enables the precise control of actuator by the oil amount regulator irrespective of the load change, but allows the hydraulic system to be made in the simple way for the various applications, since the direction switch and the oil amount regulator are separated from each other and operated independently. Therefore the reduction in the manufacturing cost and the compatibility can be achieved. Furthermore, the free falling due to the self-weight of an actuator can be effectively prevented, since the oil amount regulator is connected in parallel to the actuator.

**Claims**

1. An apparatus for controlling the moving direction and velocity of a hydraulic actuator, comprising:

   a variable displacement pump (1) driven by an engine;
   at least one hydraulic actuator (2) operated by the oil discharged from said pump;
   operating command means (3a) commanding the moving direction and velocity of said actuator;
   a controller (5) controlling said actuator according to the operating command signal from said operating command means;
   means (6) for switching the moving direction and selecting said actuator by the control signal from said controller, said means being electrically connected to said controller; and
   means for controlling the actuation speed (7) of said actuator by regulating the oil amount supplied to said actuator by the control signal from said controller, said means being electrically connected to said controller, wherein the moving direction and the actuating speed are controlled by said direction switching means and said oil amount control means, respectively.

2. The apparatus for controlling the moving direction and velocity of a hydraulic actuator as claimed in claim 1, wherein said direction switching means (6) forms the loop combining a plurality of the direction control valves connected in series to each other.

3. The apparatus for controlling the moving direction and velocity of a hydraulic actuator as claimed in claim 2, wherein said direction switching means (6) forms the loop with the 1st direction control valve, the 2nd direction control valve, the 3rd direction control valve and the 4th direction control valve connected in series, and each direction control valve is connected independently to said controller.

4. The apparatus for controlling the moving direction and velocity of a hydraulic actuator as claimed in claim 3, wherein the oil path between the 1st direction control valve and the 3rd direction control valve is connected to the pump, the oil path between the 1st direction control valve and the 2nd direction control valve connected to the large chamber of the actuator, the oil path between the 3rd direction control valve and the 4th direction control valve connected to the small chamber of the actuator, and the 2nd direction control valve and the 4th direction control valve connected to the oil amount regulator.

5. The apparatus for controlling the moving direction and velocity of a hydraulic actuator as claimed in claim 1 to claim 4, wherein said oil amount regulator (7) further comprises a proportional control valve and an unload valve which keeps constant the pressure difference of an oil between before and after passing said proportional control valve, allowing the only oil amount proportional to the input to pass through said proportional control valve.

**Patentansprüche**

1. Vorrichtung zur Steuerung der Bewegungsrichtung der Geschwindigkeit eines hydraulischen Stellantriebs, umfassend:

   - eine variable Verschiebungspumpe (1), die durch einen Motor angetrieben wird;
   - mindestens einen hydraulischen Stellantrieb (2), der durch Öl betrieben wird, welches von der Pumpe entladen wird;
   - eine Betriebssteuereinrichtung (3a), die die Bewegungsrichtung und die Geschwindigkeit des Stellantriebs steuert;
   - eine Steuerung (5) zum Steuern des Stellantriebs gemäß dem Betriebssteuersignal von der Betriebssteuereinrichtung;
   - eine Einrichtung (6) zum Umschalten der Bewegungsrichtung und zum Auswählen des Stellantriebs durch das Steuersignal von der Steuerung, wobei die Einrichtung elektrisch verbunden ist mit der Steuerung; und
   - eine Einrichtung zum Steuern der Betätigungsgeschwindigkeit (7) des Stellantriebs durch Regulieren der Ölmenge, die dem Stellantrieb zugeführt wird, durch das Steuersignal von der Steuerung, wobei die Einrichtung elektrisch verbunden ist mit der Steuerung, worin die Bewegungsrichtung und die Betätigungsgeschwindigkeit gesteuert werden durch die Richtungsumschaltungseinrichtung bzw. die Ölmengen-Steuereinrichtung.

2. Vorrichtung zur Steuerung der Bewegungsrichtung und der Geschwindigkeit eines Stellantriebs nach Anspruch 1, worin die Richtungsumschaltungseinrichtung (6) eine Schleife bildet, welche eine Anzahl von Richtungssteuerventilen kombiniert, die in Serie miteinander verbunden sind.

3. Vorrichtung zur Steuerung der Bewegungsrichtung und der Geschwindigkeit eines hydraulischen Stellantriebs nach Anspruch 2, wobei die Richtungsumschaltungsvorrichtung (6) eine Schleife bildet mit dem ersten Richtungssteuerventil, dem zweiten Richtungssteuerventil, dem dritten Richtungssteuerventil und dem vierten Richtungssteuerventil, die in Reihe verbunden sind, und wobei jedes Richtungssteuerventil unabhängig mit der Steuerung verbunden ist.

4. Vorrichtung zur Steuerung der Bewegungsrichtung und der Geschwindigkeit eines hydrauliscehn Stellantriebs nach Anspruch 3, worin der Ölweg zwischen dem ersten Richtungssteuerventil und dem dritten Richtungssteuerventil mit der Pumpe verbunden ist, der Ölweg zwischen dem ersten Richtungssteuerventil und dem zweiten Richtungssteuerventil mit der großen Kammer des Stellantriebs verbunden ist, der Ölweg zwischen dem dritten Richtungssteuerventil und dem vierten Richtungssteuerventil mit der kleinen Kammer des Stellantriebes verbunden ist, und das zweite Richtungssteuerventil und das vierte Steuerventil mit dem Ölmengenregulator verbunden sind.

5. Vorrichtung zur Steuerung der Bewegungsrichtung und der Geschwindigkeit eines hydraulischen Stellantriebs nach Anspruch 1 bis 4, worin der Ölmengenregulator (7) weiterhin ein Proportionalsteuerventil und ein Entladeventil umfaßt, welches die Druckdifferenz eines Öls zwischen vor und nach Durchgang durch das Proportionalsteuerventil konstant hält, wodurch nur eine Ölmenge proportional zum Eingang durch das Proportionalsteuerventil hindurchgeht.

**Revendications**

1. Appareil pour la commande de la direction de déplacement et la vitesse d'un organe correcteur hydraulique comprenant :

une pompe à déplacement variable (1), entraînée par un moteur ;

au moins un organe correcteur hydraulique (2) actionné par l'huile déchargée par la pompe ;

des moyens de manoeuvre (3a) agissant sur la direction de mouvement et la vitesse de l'organe correcteur ;

un organe de commande (5) commandant l'organe correcteur selon le signal de manoeuvre provenant des moyens de manoeuvre ;

des moyens (6) pour commuter la direction de déplacement et sélectionner l'organe correcteur par le signal de manoeuvre provenant de l'organe de commande, ces moyens étant raccordés électriquement à l'appareil de commande ; et

des moyens pour commander la vitesse d'actionnement (7) de l'organe correcteur en régulant la quantité d'huile alimentée à cet organe correcteur par le signal de manoeuvre provenant de l'organe de commande, ces moyens étant raccordés électriquement à l'organe de commande, appareil dans lequel la direction de déplacement et la vitesse d'actionnement sont respectivement commandées par des moyens de commutation de direction et des moyens de commande de quantité d'huile.

2. Appareil destiné à commander la direction de déplacement et la vitesse d'un organe correcteur hydraulique selon la revendication 1, dans lequel les moyens de commutation de direction (6) forment une boucle combinant plusieurs soupapes de commande de direction raccordées en série l'une par rapport à l'autre.

3. Appareil destiné à commander la direction de déplacement et la vitesse d'un organe correcteur hydraulique selon la revendication 2, dans lequel les moyens de commutation de direction (6) forment la boucle avec la première soupape de commande de direction, la seconde soupape de commande de direction, la troisième soupape de commande de direction et la quatrième soupape de commande de direction raccordées en série, et chaque soupape de commande de direction étant raccordée indépendamment à l'organe de commande.

4. Appareil destiné à commander la direction de déplacement et la vitesse d'un organe correcteur hydraulique selon la revendication 3, dans lequel un circuit d'huile entre la première soupape de commande de direction et la troisième soupape de commande de direction est raccordé à la pompe, le circuit d'huile entre la première soupape de commande de direction et la seconde soupape de commande de direction étant raccordé à la grande chambre de l'organe correcteur, le circuit d'huile entre la troisième soupape de commande de direction et la quatrième soupape de commande de direction étant raccordé à la petite chambre de l'organe correcteur et la deuxième soupape de commande de direction et la quatrième soupape de commande de direction étant raccordées au régulateur de quantité d'huile.

5. Appareil destiné à commander la direction de déplacement et la vitesse d'un organe correcteur hydraulique selon la revendication 1 jusqu'à la revendication 4, dans lequel le régulateur de quantité d'huile (7) comprend de plus une soupape de commande proportionnelle et une soupape de décharge qui maintient l'écart de pression constant d'une huile dans la période située avant et après la traversée de la soupape de commande proportionnelle, n'autorisant la traversée de la soupape de commande proportionnelle qu'à la seule quantité d'huile proportionnelle à l'entrée.

FIG 1

FIG 2

FIG 3